# EUROPÄISCHE PATENTSCHRIFT

(11) **EP 2 870 350 B1**
(45) Veröffentlichungstag und Bekanntmachung des Hinweises auf die Patenterteilung: **13.04.2016**
(21) Anmeldenummer: 13734695.3
(22) Anmeldetag: 25.06.2013
(51) Int. Cl.: F02M 26/00, F16K 15/16

(54) **RÜCKSCHLAGVENTILVORRICHTUNG FÜR EINE VERBRENNUNGSKRAFTMASCHINE**
CHECK VALVE ARRANGEMENT FOR INTERNAL COMBUSTION ENGINE
DISPOSITIF DE CLAPET DE RETENUE POUR MOTEUR À COMBUSTION INTERNE

(30) Priorität: 04.07.2012 DE 102012105971
(43) Veröffentlichungstag der Anmeldung: 13.05.2015
(73) Patentinhaber: Pierburg GmbH, 41460 Neuss (DE)
(72) Erfinder: HAMBLOCH, Stephan, 52459 Inden (DE); BAUMEISTER, Lars, 41334 Nettetal (DE); JASPER, Jessica, 47799 Krefeld (DE)
(74) Vertreter: Patentanwälte ter Smitten Eberlein Rütten Partnerschaftsgesellschaft
(86) Internationale Anmeldenummer: PCT/EP2013/063270
(87) Internationale Veröffentlichungsnummer: WO 2014/005884

(56) Entgegenhaltungen:
- EP-A1- 2 133 547
- EP-A2- 1 243 779
- EP-A2- 1 795 730
- WO-A1-2011/088936
- WO-A1-2011/089038
- DE-B- 1 035 994

## Beschreibung

Die Erfindung betrifft eine Rückschlagventilvorrichtung für eine Verbrennungskraftmaschine mit einem Kanalgehäuse, einem Ventilgehäuse, welches zumindest einen Durchströmungsquerschnitt aufweist und im Kanalgehäuse angeordnet ist, zumindest einem Ventilsitz, der den Durchströmungsquerschnitt umgibt und zumindest einem Ventilschließglied, über welches der Durchströmungsquerschnitt verschließbar oder freigebbar ist und welches als Blattfeder ausgebildet ist

Rückschlagventile werden insbesondere in Abgasrückführleitungen eingesetzt, um zu verhindern, dass Luft aus der Ladeluftleitung in die Abgasrückführleitung strömt, wenn der Druck in der Ladeluftleitung aufgrund der Druckschwankungen im Abgasbereich höher ist als der Druck in der Abgasrückführleitung. Diese Ventile sollen möglichst schnell öffnen und schließen, so dass sie zumeist als Flatterventile mit Blattfederelementen als Ventilschließglieder ausgeführt werden. Da der Öffnungsquerschnitt solcher Flatterventile begrenzt ist und Öffnungsbegrenzer in Form von Anschlagelementen vorzusehen sind, um ein Brechen der Blattfedern zu verhindern, werden diese Ventile zumeist mehrflutig ausgebildet. Da auch Rückströmungen innerhalb des Abgasrückführkanals durch diese Rückschlagventile vermieden werden, erhöht sich die Abgasrückführrate durch Verwendung dieser Ventile, was wiederum eine Schadstoffreduzierung zur Folge hat.

So ist aus der DE 10 2009 007 609 A1 ein mehrflutiges Rückschlagventil bekannt, bei dem die Anschlagelemente und die Ventilschließglieder einstückig ausgebildet sind und in entsprechende Aufnahmen des Gehäuses eingesteckt beziehungsweise eingeschoben werden. Die Durchströmungsquerschnitte sind jeweils paarweise gegenüberliegend angeordnet.

Des Weiteren ist aus der EP 1 098 085 A2 ein vierflutiges Rückschlagventil bekannt welches ein Ventilgehäuse aus zwei prismenförmig zueinander angeordneten Elementen aufweist, deren Seitenflächen jeweils zwei Ventilsitze bilden, welche Durchströmungsfenster begrenzen. Jedem Ventilsitz ist ein Btattfederelement als Schließkörper und ein Anschlagelement zugeordnet. Das Ventilgehäuse weist Einspannflächen auf, auf denen die Blattfedern und die Anschlagelemente mittels Schrauben befestigt sind.

Zusätzlich ist aus der CN 201 739 030 U ein Rückschlagventil in einem Kanalgehäuse bekannt, welches aus zwei nebeneinander angeordneten prismenförmigen Ventilgehäusen besteht. Das umgebende Gehäuse ist entlang der Ventilgehäuse mit einer Einschnürung ausgeführt, um den Querschnitt des Kanalgehäuses auf den Querschnitt einer stromabwärtig angeordneten Drosselklappe zu reduzieren.

Zusätzlich sind aus der DE 20 2005 019 518 U1 oder der JP 59-155673 A Abgasrückschlagventile bekannt, bei denen die Blattfedern bei vollständiger Öffnung relativ nah an das umgebende Gehäuse reichen, weiches in der erstgenannten Schrift eine auf das Rückschlagventil folgende Einschnürung aufwe ist.

Eine weitere Rückschlagventilvorrichtung ist aus der EP 1 795 730 A2 bekannt.

Alle diese bekannten Rückschlagventilvorrichtungen haben jedoch den Nachteil, dass sich im Bereich neben den Blattfederelementen also zwischen den Blattfederelementen und dem umgebenden Gehäuse oder bei zueinander gewandten Blattfederelementen zwischen diesen durch die auftretenden Pulsationen Rückströmungen und Wirbel bilden. Diese rückläufigen Wirbel erhöhen den Druckverlust und verringern entsprechend das zur Abgasrückführung benötigte Druckgefälle, was zu einer verminderten Effektivität des Verbrennungsmotors führt.

Es stellt sich daher die Aufgabe, eine Rückschlagventilvorrichtung zu schaffen, mit der der Druckverlust am Rückschlagventil reduziert wird, so dass der Treibstoffverbrauch und die Schadstoffemissionen eines Verbrennungsmotors durch Erhöhung der Abgasrückführrate gesenkt werden kann.

Diese Aufgabe wird durch eine Rückschlagventilvorrichtung mit den Merkmalen des Hauptanspruchs gelöst.

Dadurch, dass sich das Kanalgehäuse und/oder ein Einbauelement im zum Ventilgehäuse äußeren Bereich unmittelbar vor dem stromabwärtigen Ende jedes Fensters über die gesamte Breite des Ventilgehäuses erstreckt, wobei der Abstand zwischen jeder Blattfeder am stromabwärtigen Ende jedes Fensters im maximal geöffneten Zustand und dem gegenüberliegenden Kanalgehäuse und/oder Einbauelement maximal doppelt so groß ist, wie der Abstand zwischen jeder Blattfeder im maximal geöffneten Zustand am stromabwärtigen Ende und dem gegenüberliegenden Ventilsitz, wobei begrenzende Innenwände des Kanalgehäuses stromabwärts des Ventilgehäuses derart zueinander angeordnet sind, dass zunächst eine stetige Querschnittsverengung erfolgt, an die sich eine stetige Querschnittserweiterung anschließt, werden Räume zwischen dem umgebenden Gehäuse und den Ventilgehäusen, in denen sich rückströmende Wirbel bilden könnten, weitestgehend eliminiert. Dies verringert den Druckverlust und erhöht somit die mögliche Abgasrückführrate. Es entsteht eine gleichförmige Strömung ohne Wirbelbildung und mit minimiertem Druckverlust. Durch die auf die stetige Querschnittsverengung folgende Querschnittserweiterung entsteht der Effekt einer Düse, wodurch zusätzlich ein Rückströmen vermieden wird. Auf diese Weise wird eine vollständige störungsfreie Strömungsführung durch das Kanalgehäuse hergestellt, da auch Strömungshindernisse und Querschnittssprünge vermieden werden.

In einer bevorzugten Ausführung der Erfindung dient das Kanalgehäuse am stromabwärtigen Ende der Fenster als Anschlagelement, so dass auf zusätzliche am Ventilgehäuse anzubringende Anschlagelemente verzichtet werden kann und der Spalt zum Kanalgehäuse vollständig verschlossen wird.

In einer alternativen Ausführung weist das Ventilgehäuse am stromabwärtigen Ende der Fenster ein Anschlagelement auf, welches am Ventilgehäuse befestigt ist. So kann das umliegende Kanalgehäuse mit größeren Toleranzen hergestellt werden, ohne dass eine Überlastung der Blattfedern möglich wäre.

Vorzugsweise erstreckt sich das Kanalgehäuse über die gesamte Öffnungshöhe der Blattfeder mit einem Abstand zum Ventilsitz, der maximal dem dreifachen der maximalen Öffnungsweite zwischen der Blattfeder und dem Ventilsitz entspricht. So wird der Raum im zu den Blattfedern seitlichen Bereich weitestgehend verschlossen, so dass auch eine Wirbelbildung in einem hinter dem Spalt angeordneten Raum bei einer Rückströmung durch den Spalt zwischen dem Ende der Blattfeder und dem dazu gegenüberliegenden Gehäuse vermieden wird.

In einer vorteilhaften Ausgestaltung der Erfindung ist das Ventilgehäuse prismenförmig ausgebildet und weist zumindest zwei vom Ventilsitz begrenzte Fenster auf, die jeweils maximal einen Abstand in Größe der dreifachen maximalen Öffnungsweite der Blattfedern vom umgebenden Kanalgehäuse aufweisen.

In einer hierzu weiterführenden Ausführungsform sind die stetige Querschnittserweiterung und Querschnittsverengung durch Radien an den Innenwänden des Kanalgehäuses gebildet, welche in den Werkzeugen zur Herstellung des Kanalgehäuses einfach darstellbar sind.

Vorzugsweise entspricht der engste Durchströmungsquerschnitt am Ende der Querschnittsverengung zumindest der Summe der freien Durchströmungsquerschnitte aller Fenster bei geöffneten Blattfedern, so dass Querschnittssprünge beim Ausströmen aus dem Ventilgehäuse vermieden werden, wodurch wiederum Wirbelbildungen und Rückströmungen weitestgehend ausgeschlossen werden.

Um auch große Strömungsmengen durch die Rückschlagventilvorrichtung führen zu können, wie dies bei Motoren mit großem Hubraum oder bei hohen geforderten Abgasrückführmengen erforderlich ist, sind im Kanalgehäuse zwei prismenförmige Ventilgehäuse derart nebeneinander angeordnet, dass sich die vier Blattfedern in einer Reihe befinden.

Bei einer derartigen Ausführung mit zwei Ventilgehäusen ist es vorteilhaft, wenn die zwei zum Kanalgehäuse gewandten Ventilsitze einen Abstand von maximal der dreifachen Öffnungsweite der Blattfedern zum Kanalgehäuse aufweisen und die beiden gegenüberliegenden inneren Ventilsitze an ihrem stromabwärtigen Ende einen Abstand von maximal der dreifachen Öffnungsweite der Blattfedern zu einem Einbauelement, welches zwischen den Ventilgehäusen angeordnet ist, aufweisen. Auf diese Weise kann auch im inneren Bereich, in dem das Kanalgehäuse selber zur Vermeidung von Rückströmungen nicht dienen kann, eine Wirbelbildung zwischen den beiden Ventilgehäusen verhindert werden.

In einer weiterführenden Ausführung erstreckt sich das Einbauelement zwischen den beiden Ventilgehäusen und ist im Querschnitt pfeilförmig ausgebildet, wobei die Pfeilarme im Abstand von maximal der dreifachen Öffnungsweite der Blattfedern am stromabwärtigen Ende der Fenster enden. Der Aufbau und die Herstellung eines derartigen Einbauelementes sind einfach, ohne dass zu viel Material verwendet werden müsste.

In einer weiteren alternativen bevorzugten Ausführung weist das Ventilgehäuse pyramidenförmig zueinander angeordnete Ventilsitze auf, wobei der Abstand der vier Fenster zum Kanalgehäuse maximal der dreifachen Öffnungsweite jeder Blattfeder im geöffneten Zustand entspricht. Entsprechend kann in diesem Fall bei angepasster Form des Kanalgehäuses für alle vier Fenster eine Rückströmung und Wirbelbildung verhindernde Wandfläche neben den Durchströmfenstern erzeugt werden.

Es wird somit eine Rückschlagventilvorrichtung geschaffen, bei der der Druckverlust zuverlässig verringert wird und somit die Förderraten gesteigert werden können. Der Aufbau und die Montage sind einfach, da keine oder nur wenige zusätzliche Bauteile verwendet werden müssen. So können Schadstoffemissionen verringert werden.

Ein Ausführungsbeispiel der Erfindung ist in den Zeichnungen dargestellt und wird nachfolgend beschrieben.
Figur 1 zeigt eine Seitenansicht einer erfindungsgemäßen Rückschlagventilvorrichtung in geschnittener Darstellung.
Figur 2 zeigt eine Seitenansicht einer alternativen erfindungsgemäßen Rückschlagventilvorrichtung in geschnittener Darstellung.

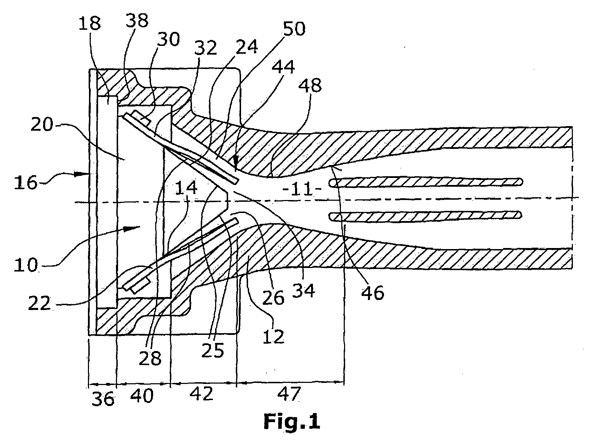

Die in Figur 1 dargestellte erfindungsgemäße Rückschlagventilvorrichtung besteht aus einem Rückschlagventil 10, welches in einem einen Kanal 11 begrenzenden Kanalgehäuse 12 angeordnet ist. Das Rückschlagventil 10 weist ein Ventilgehäuse 14 auf, welches prismenförmig ausgebildet ist. Ein Einlass 16 ist an einer Grundfläche 18 des Ventilgehäuses 14 ausgebildet, von der aus sich zwei parallele und zwei aufeinander zulaufende Mantelflächen 20, 22 in das Kanalgehäuse 12 erstrecken.

An den aufeinander zulaufenden Mantelflächen 22 sind Fenster 24 ausgebildet, die als Auslass 26 dienen. Die Fenster 24 sind jeweils durch einen Ventilsitz 25 begrenzt, gegen den jeweils eine Blattfeder 28 im den Durchströmungsquerschnitt verschließenden Zustand anliegt, so dass die Blattfedern 28 als Ventilschließglieder wirken. Die Blattfedern 28 sind über Schrauben 30 an der zum Einlass gewandten Seite der Mantelflächen 22 befestigt, wobei die Schrauben 30 gleichzeitig zur Befestigung je eines plattenförmigen Anschlagelementes 32 dienen, welches sich wie die Blattfedern 28 weitestgehend über die Höhe und Breite der Mantelflächen 22 erstrecken. Dabei sind die Anschlagelemente 32 so ausgeformt, dass sie an der zum Einlass 16 gegenüberliegenden Seite eine maximale Öffnungsweite 34 der Blattfedern 28 festlegen.

Das umliegende Kanalgehäuse 12 weist einen ersten Abschnitt 36 auf, der zur umgrenzenden Aufnahme der Grundfläche 18 des Ventilgehäuses 14 dient. Eine folgende Einschnürung 38, von der aus sich das Kanalgehäuse in einem zweiten Abschnitt 40 mit geringfügig verengtem Querschnitt zunächst gerade weiter erstreckt dient als Anschlag für die Grundfläche 18 des Ventilgehäuses 14. Der zweite Abschnitt 40 wird durch eine sich zur Mittelachse erstreckende weitere Einschnürung begrenzt, die bis auf einen Abstand an das Ventilgehäuse 14 herangeführt ist, der etwa der zweifachen maximalen Öffnungsweite 34 der Blattfeder 28 entspricht. Diese Einschnürung befindet sich etwa in der Höhe zum Ventilgehäuse 14, in der die Biegung der Blattfeder 28 beim Öffnungsvorgang vom Ventilsitz abgehoben wird.

Im sich daran anschließenden dritten Abschnitt 42 wird dieser Abstand zum Ventilgehäuse 14 beziehungsweise zu den Ventilsitzen 25 oder den Mantelflächen 22 konstant gehalten. Insbesondere beträgt erfingdungsgemäß der Abstand an einem stromabwärtigen Ende 44 der Fenster 24 lediglich etwa dem zweifachen der Öffnungsweite 34 der Blattfedern 28 beziehungsweise entspricht der Abstand der Anschlagelemente 32 zur gegenüberliegenden Innenwand 46 des Kanalgehäuses 12 im Wesentlichen der Öffnungsweite 34.

Der dritte Abschnitt 42 bildet entsprechend eine Querschnittsverengung, die im folgenden vierten Abschnitt 46 stetig in einen Radius 48 übergeht, so dass auf die Querschnittsverengung eine Querschnitterweiterung erfolgt, die im Folgenden stetig in einen gewünschten Anschlussdurchmesser übergeht. Der engste Querschnitt, der möglichst nah hinter dem stromabwärtigen Ende 44 des Blattfederelementes 28 ausgebildet ist, weist einen Querschnitt auf, der weitestgehend dem gesamten summierten Öffnungsquerschnitt der beiden geöffneten Blattfedern 28 entspricht.

Strömt Gas aus dem Auslass 26 also durch die Fenster 24 nach außen, entsteht eine relativ gerade gerichtete Strömungen, da keine Querschnittssprünge vorhanden sind, die eine Wirbelbildung begünstigen. Des Weiteren wird ein Spalt 50 zwischen den Anschlagelementen 32 beziehungsweise den geöffneten Blattfedern 28 so gering gehalten, dass kein ausreichendes Volumen zur Ausbildung einer Wirbelbildung durch Rückströmungen zwischen dem Ventilgehäuse 14 und dem Kanalgehäuse 12 zur Verfügung steht. Auch der Hauptausströmbereich am stromabwärtigen Ende 44 der Blattfedern 28 wird im Folgenden von Strömungshindernissen frei gehalten.

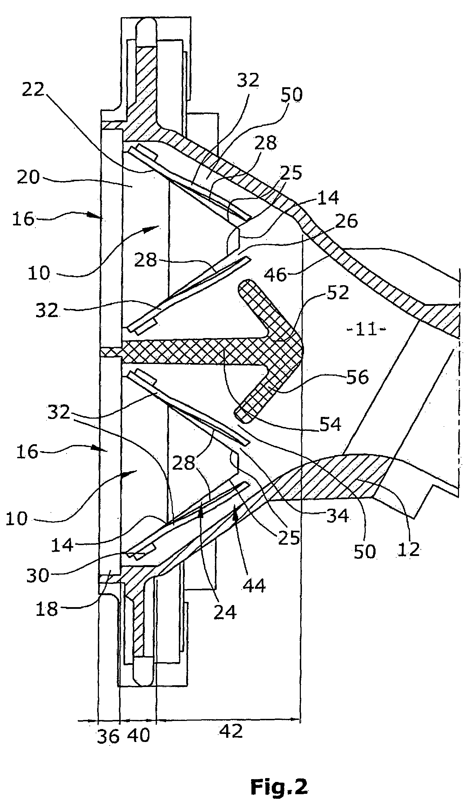

Die alternative, in Figur 2 dargestellte Rückschlagventilvorrichtung unterscheidet sich von der ersten vor allem dadurch, dass zwei prismenförmige Rückschlagventile 10 in einem gemeinsamen Kanalgehäuse 12 nebeneinander angeordnet sind, wobei die Grundflächen 18 und die parallel verlaufenden Mantelflächen 20 der beiden Ventilgehäuse 14 jeweils in einer gemeinsamen Ebene liegen, so dass zwei der Fenster 24 einander gegenüberliegen.

Zwischen den beiden Ventilgehäusen 14 ist ein pfeilförmiges Einbauelement 52 angeordnet, dessen Grundpfeilkörper 54 sich senkrecht zu den Grundflächen 18 der Ventile 10 im Wesentlichen entlang der Mittelachse des Kanalgehäuses 12 erstreckt und dessen Pfeilarme 56 in Richtung des stromabwärtigen Endes 44 der einander gegenüberliegenden Blattfedern 28 weisen. Zumindest die Pfeilarme 56 des Einbauelementes 52 erstrecken sich über die gesamte Breite des Kanals 11 und enden erfindungsgemäß in einem Abstand zu den Fenstern 24, der geringfügig größer ist als die Öffnungsweite 34 der Blattfedern 28.

Das hier dargestellte Kanalgehäuse 12 weist lediglich den ersten Abschnitt 36 zur Aufnahme der Grundfläche 18 der Ventilgehäuse 14 sowie den zweiten Abschnitt 40 mit gleichförmigem Querschnitt auf, an den sich jedoch ohne Einschnürung unmittelbar der dritte, sich parallel zu den äußeren Fenstern 24 erstreckende Abschnitt 42 anschließt, dessen Abstand zu den Anschlagelementen 32 etwa dem 1,5-fachen der maximalen Öffnungsweite 34 der Blattfederelemente 28 entspricht. Auch in diesem Ausführungsbeispiel folgt stromabwärts der Rückschlagventile 10 eine weitere Querschnittsverengung, die stetig in einen leicht schräg verlaufenden Kanal übergeht.

Wirbelbildungen aufgrund von Rückströmungen durch die geringen, vorhandenen Volumen und kleinen Spalte 50 außerhalb der Ventilgehäuse 14 zwischen dem Kanalgehäuse 12 beziehungsweise dem Einbauelement 52 und den Anschlagelementen 32 werden zuverlässig vermieden. Auch werden Strömungshindernisse im Bereich der Auslässe vermieden. So können bei der Verwendung in einem Abgasrückführstrang die Druckverluste minimiert werden und somit die Strömungsmengen erhöht werden. Die daraus folgenden Abgasrückführraten führen zu einer Effizienzsteigerung des Verbrennungsmotors.

Es sollte deutlich sein, dass innerhalb des Schutzbereiches des Hauptanspruchs verschiedene konstruktive Änderungen denkbar sind. So können beliebig viele derartige Rückschlagventile nebeneinander oder hintereinander angeordnet werden. Auch kann bei genauer Auslegung des Kanalgehäuses dieses gleichzeitig als Anschlag dienen, so dass die Anschlagelemente entfallen können. Die beschrieben Pfeilform des Einbauelementes ist ebenfalls im Schutzbereich der Ansprüche modifizierbar. Des Weiteren ist die Verwendung anders aufgebauter Rückschlagventile, wie pyramidenförmiger Rückschlagventile denkbar.

## Patentansprüche

1. Rückschlagventilvorrichtung für eine Verbrennungskraftmaschine mit
einem Kanalgehäuse (12),
einem Ventilgehäuse (14), welches zumindest ein einen Durchströmungsquerschnitt bildendes Fenster (24) aufweist und im Kanalgehäuse (12) angeordnet ist,
zumindest einem Ventilsitz (25), der den Durchströmungsquerschnitt umgibt und
zumindest einem Ventilschließglied, über welches der Durchströmungsquerschnitt verschließbar oder freigebbar ist und welches als Blattfeder (28) ausgebildet ist
**dadurch gekennzeichnet, dass**
sich das Kanalgehäuse (12) und/oder ein Einbauelement (52) im zum Ventilgehäuse (14) äußeren Bereich unmittelbar vor dem stromabwärtigen Ende (44) jedes Fensters (24) über die gesamte Breite des Ventilgehäuses (14) erstreckt, wobei der Abstand zwischen jeder Blattfeder (28) am stromabwärtigen Ende jedes Fensters (24) im maximal geöffneten Zustand und dem gegenüberliegenden Kanalgehäuse (12) und/oder Einbauelement (52) maximal doppelt so groß ist, wie der Abstand zwischen jeder Blattfeder (28) im maximal geöffneten Zustand am stromabwärtigen Ende (44) und dem gegenüberliegenden Ventilsitz (25), wobei begrenzende Innenwände (46) des Kanalgehäuses (12) stromabwärts des Ventilgehäuses (14) derart zueinander angeordnet sind, dass zunächst eine stetige Querschnittsverengung erfolgt, an die sich eine stetige Querschnittserweiterung anschließt.

2. Rückschlagventilvorrichtung für eine Verbrennungskraftmaschine nach Anspruch 1,
**dadurch gekennzeichnet, dass**
das Kanalgehäuse (12) am stromabwärtigen Ende der Fenster (24) als Anschlagelement dient.

3. Rückschlagventilvorrichtung für eine Verbrennungskraftmaschine nach Anspruch 1,
**dadurch gekennzeichnet, dass**
das Ventilgehäuse (14) am stromabwärtigen Ende (44) der Fenster (24) ein Anschlagelement (32) aufweist.

4. Rückschlagventilvorrichtung für eine Verbrennungskraftmaschine nach einem der vorhergehenden Ansprüche,
**dadurch gekennzeichnet, dass**
sich das Kanalgehäuse (12) über die gesamte Öffnungshöhe der Blattfeder (28) mit einem Abstand zum Ventilsitz (25) erstreckt, der maximal dem dreifachen der maximalen Öffnungsweite (34) zwischen der Blattfeder (28) und dem Ventilsitz (25) entspricht.

5. Rückschlagventilvorrichtung für eine Verbrennungskraftmaschine nach einem der vorhergehenden Ansprüche,
**dadurch gekennzeichnet, dass**
das Ventilgehäuse (14) prismenförmig ausgebildet ist und zumindest zwei vom Ventilsitz (25) begrenzte Fenster (24) aufweist, die jeweils maximal einen Abstand in Größe der dreifachen maximalen Öffnungsweite (34) der Blattfedern (28) vom umgebenden Kanalgehäuse (12) aufweisen.

6. Rückschlagventilvorrichtung für eine Verbrennungskraftmaschine nach einem der vorhergehenden Ansprüche,
**dadurch gekennzeichnet, dass**
die stetige Querschnittserweiterung und Querschnittsverengung durch Radien an den Innenwänden (46) des Kanalgehäuses (12) gebildet sind.

7. Rückschlagventilvorrichtung für eine Verbrennungskraftmaschine nach einem der vorhergehenden Ansprüche,
**dadurch gekennzeichnet, dass**
der engste Durchströmungsquerschnitt am Ende der Querschnittsverengung zumindest der Summe der freien Durchströmungsquerschnitte aller Fenster (24) bei geöffneten Blattfedern (28) entspricht.

8. Rückschlagventilvorrichtung für eine Verbrennungskraftmaschine nach einem der Ansprüche 5 bis 7,
**dadurch gekennzeichnet, dass**
im Kanalgehäuse (12) zwei prismenförmige Ventilgehäuse (14) derart nebeneinander angeordnet sind, dass die vier Blattfedern (28) in einer Reihe angeordnet sind.

9. Rückschlagventilvorrichtung für eine Verbrennungskraftmaschine nach Anspruch 8,
**dadurch gekennzeichnet, dass**
die zwei zum Kanalgehäuse (12) gewandten Ventilsitze (25) einen Abstand von maximal der dreifachen Öffnungsweite (34) der Blattfedern (28) zum Kanalgehäuse (12) aufweisen und die beiden gegenüberliegenden inneren Ventilsitze (25) am stromabwärtigen Ende (44) der Fenster (24) einen Abstand von maximal der dreifachen Öffnungsweite (34) der Blattfedern (28) zu einem Einbauelement (52), welches zwischen den Ventilgehäusen (14) angeordnet ist, aufweisen.

10. Rückschlagventilvorrichtung für eine Verbrennungskraftmaschine nach Anspruch 9,
**dadurch gekennzeichnet, dass**
das Einbauelement (52) sich zwischen den beiden Ventilgehäusen (14) erstreckt und im Querschnitt pfeilförmig ausgebildet ist, wobei die Pfeilarme (56) im Abstand von maximal der dreifachen Öffnungsweite (34) der Blattfedern (28) am stromabwärtigen Ende (44) der Fenster (24) enden.

11. Rückschlagventilvorrichtung für eine Verbrennungskraftmaschine nach einem der Ansprüche 1 bis 4,
**dadurch gekennzeichnet, dass**
das Ventilgehäuse (14) pyramidenförmig zueinander angeordnete Ventilsitze (25) aufweist, wobei der Abstand der vier Ventilsitze (25) zum Kanalgehäuse (12) maximal der dreifachen Öffnungsweite (34) jeder Blattfeder (28) im geöffneten Zustand entspricht.

## Claims

1. A non-return valve device for an internal combustion engine including a duct housing (12),
a valve housing (14) comprising at least one aperture (24) that defines a flow cross section and is arranged in said duct housing (12),
at least one valve seat (25) surrounding the flow cross section, and
at least one valve closing member via which the flow cross section is adapted to be closed or opened and which is configured as a leaf spring (28),
**characterized in that**
said duct housing (12) and/or an insert element (52) extend across the overall width of said valve housing (14) in an outer region relative to said valve housing (14) immediately in front of the downstream end (44) of each aperture (24), wherein the distance between each leaf spring (28), in its maximum opened state, at the downstream end of each aperture (24) and said opposing duct housing (12) and/or insert element (52) is at maximum twice as large as the distance between each leaf spring (28), in its maximum opened state, at said downstream end (44) and said opposing valve seat (25), wherein defining inner walls (46) of said duct housing (12) downstream of said valve housing (14) are arranged relative to each other such that at first the cross section is continuously reduced and then the cross section is continuously enlarged.

2. The non-return valve device for an internal combustion engine according to claim 1,
**characterized in that**
the duct housing (12) at the downstream end of the apertures (24) serves as a stopper element

3. The non-return valve device for an internal combustion engine according to claim 1,
**characterized in that**
the valve housing (14) at the downstream end (44) of the apertures (24) comprises a stopper element (32).

4. The non-return valve device for an internal combustion engine according to any one of the preceding claims,
**characterized in that**
the duct housing (12) extends across the overall opening height of the leaf spring (28) at a distance to the valve seat (25) corresponding at maximum to three times the maximum opening width (34) between the leaf spring (28) and said valve seat (25).

5. The non-return valve device for an internal combustion engine according to any one of the preceding claims,
**characterized in that**
the valve housing (14) is configured as a prism and comprises at least two apertures (24) defined by the valve seat (25), said apertures respectively having a maximum distance to the surrounding duct housing (12) corresponding to three times the maximum opening width (34) of the leaf springs (28).

6. The non-return valve device for an internal combustion engine according to any one of the preceding claims,
**characterized in that**
the continuous enlargement of the cross section and reduction of the cross section are defined by radii at the inner walls (46) of the duct housing (12).

7. The non-return valve device for an internal combustion engine according to any one of the preceding claims,
**characterized in that**
the narrowest flow cross section at the end of the reduced portion of the cross section corresponds at least to the sum of the free flow cross sections of all apertures (24) when the leaf springs (28) are opened.

8. The non-return valve device for an internal combustion engine according to any one of claims 5 to 7,
**characterized in that**
in the duct housing (12) two prism-shaped valve housings (14) are arranged side by side such that the four leaf springs (28) are arranged in series.

9. The non-return valve device for an internal combustion engine according to claim 8,
**characterized in that**
the two valve seats (25) facing the duct housing (12) have a distance to the duct housing (12) corresponding at maximum to three times the opening width (34) of the leaf springs (28), and the two opposing inner valve seats (25) at the downstream end (44) of the apertures (24) have a distance to an insert element (52) corresponding at maximum to three times the opening width (34) of the leaf springs (28), which insert element is arranged between the valve housings (14).

10. The non-return valve device for an internal combustion engine according to claim 9,
**characterized in that**
the insert element (52) extends between the two valve housings (14) and its cross section is configured as an arrow, wherein the arms (56) of the arrow end at a distance corresponding at maximum to three times the opening width (34) of the leaf springs (28) at the downstream end (44) of the apertures (24).

11. The non-return valve device for an internal combustion engine according to any one of claims 1 to 4,
**characterized in that**
the valve housing (14) comprises valve seats (25) arranged in the form of a pyramid relative to each other, wherein the distance of the four valve seats (25) to the duct housing (12) corresponds at maximum to three times the opening width (34) of each leaf spring (28) in its opened state.

## Revendications

1. Dispositif de clapet de retenue pour un moteur à combustion interne avec
un boitier de canal (12),
un boitier de clapet (14) avec au moins une fenêtre (24) définissant une section transversale d'écoulement et disposé dans le boitier de canal (12),
au moins une siège de clapet (25) entourant la section transversale d'écoulement, et
au moins un élément de fermeture du clapet, par lequel ladite section transversale d'écoulement peut être obturée ou libérée et qui est réalisé sous forme d'un ressort à lame (28),
**caractérisé en ce que**
dans la région extérieure par rapport au boitier de clapet (14), le boitier de canal (12) et/ou un élément intégré (52) s'étendent immédiatement avant l'extrémité avale (44) de chaque fenêtre (24) à travers toute la largeur du boitier de clapet (14), la distance entre chaque ressort à lame (28) à l'extrémité avale (44) de chaque fenêtre (24) en état ouvert au maximum et le boitier de canal (12) et/ou l'élément intégré (52) opposé étant au maximum deux fois la distance entre chaque ressort à lame (28) en état ouvert au maximum à l'extrémité avale (44) et la siège de clapet (25) opposée, des parois internes délimitantes (46) du boitier de canal (12) sont disposées l'une par rapport á l'autre en aval du boitier de clapet (14) de sorte que d'abord la section transversale se rétrécit continûment, suivi par un élargissement continu de la section transversale.

2. Dispositif de clapet de retenue pour un moteur à combustion interne selon la revendication 1, **caractérisé en ce que** le boitier de canal (12) sert d'élément de butée à l'extrémité avale des fenêtres (24).

3. Dispositif de clapet de retenue pour un moteur à combustion interne selon la revendication 1, **caractérisé en ce que** le boitier de clapet (14) présente un élément de butée (32) à l'extrémité (44) avale des fenêtres (24).

4. Dispositif de clapet de retenue pour un moteur à combustion interne selon l'une quelconque des revendications précédentes, **caractérisé en ce que**, à travers toute la hauteur d'ouverture du ressort à lame (28), le boitier de canal (12) s'étend à distance de la siège de clapet (25), la distance étant au maximum trois fois la largeur d'ouverture (34) maximale entre le ressort à lame (28) et la siège de clapet (25).

5. Dispositif de clapet de retenue pour un moteur à combustion interne selon l'une quelconque des revendications précédentes, **caractérisé en ce que** le boitier de clapet (14) est réalisé sous forme d'un prisme et comprend au moins deux fenêtres (24) délimitées par la siège de clapet (25), chacune étant disposée à une distance au boitier de canal (12) correspondant au maximum trois fois la largeur d'ouverture (34) maximale des ressorts à lame (28).

6. Dispositif de clapet de retenue pour un moteur à combustion interne selon l'une quelconque des revendications précédentes, **caractérisé en ce que** le rétrécissement et l'élargissement continu de la section transversale son formés par des rayons sur les parois internes (46) du boitier de canal (12).

7. Dispositif de clapet de retenue pour un moteur à combustion interne selon l'une quelconque des revendications précédentes, **caractérisé en ce que** la section transversale d'écoulement la plus étroite au bout du rétrécissement de la section transversale correspond au moins à la somme des sections transversales d'écoulement libres de toutes les fenêtres (24) en état ouvert des ressorts à lame (28).

8. Dispositif de clapet de retenue pour un moteur à combustion interne selon l'une quelconque des revendications 5 à 7, **caractérisé en ce que**, dans le boitier de canal (12), deux boitiers de clapet (14) en forme de prisme sont disposés l'un à côté de l'autre de sorte que les quatre ressorts à lame (28) sont disposés dans une rangée.

9. Dispositif de clapet de retenue pour un moteur à combustion interne selon la revendication 8, **caractérisé en ce que** les deux sièges de clapet (25) tournées vers le boitier de canal (12) sont disposées à une distance au boitier de canal (12) correspondant au maximum trois fois la largeur d'ouverture (34) maximale des ressorts à lame (28), et qu'à l'extrémité avale (44) des fenêtres (24), les deux sièges de clapet (25) intérieures opposées sont disposées à une distance à un élément intégré (52) correspondant au maximum trois fois la largeur d'ouverture (34) maximale des ressorts à lame (28), ledit élément intégré étant disposé entre les boitier de clapet (34).

10. Dispositif de clapet de retenue pour un moteur à combustion interne selon la revendication 9, **caractérisé en ce que** l'élément intégré (52) s'étend entre les deux boitiers de clapet (14) et est en forme de flèche, vu en section transversale, les branches (56) de la flèche se terminant à l'extrémité avale (44) des fenêtres (34) à une distance correspondant au maximum à trois fois la largeur d'ouverture (34) des ressorts à lame (28).

11. Dispositif de clapet de retenue pour un moteur à combustion interne selon l'une quelconque des revendications 1 à 4, **caractérisé en ce que** le boitier de clapet (14) comprend des sièges de clapet (25) disposées l'une par rapport à l'autre en forme de pyramide, la distance des quatre sièges de clapet (25) au boitier de canal (12) correspondant au maximum à trois fois la largeur d'ouverture (24) de chaque ressort à lame (28) en état ouvert.
